Europäisches Patentamt

European Patent Office

Office européen des brevets

(11) Publication number: **0 431 730 A2**

## EUROPEAN PATENT APPLICATION

(21) Application number: 90309954.7

(51) Int. Cl.5: **G01G 23/18**

(22) Date of filing: **11.09.90**

The title of the invention has been amended (Guidelines for Examination in the EPO, A-III, 7.3).

(30) Priority: **16.10.89 JP 269934/89**

(43) Date of publication of application: **12.06.91 Bulletin 91/24**

(84) Designated Contracting States: **DE FR GB IT**

(71) Applicant: YAMATO SCALE COMPANY, LIMITED
5-22, Saenba-cho
Akashi-shi Hyogo-ken(JP)

(72) Inventor: Taguchi, Michio
364-1, Ryuko, Issai-cho
Tatsuno-shi, Hyogo-ken(JP)
Inventor: Maehara, Masao
1209-414, Rokubuichi, Inami-cho
Kako-gun, Hyogo-ken(JP)

(74) Representative: Lerwill, John et al
A.A. Thornton & Co. Northumberland House
303-306 High Holborn
London, WC1V 7LE(GB)

(54) **Message language switching device for the display of a combination weigher.**

(57) A message language switching device included in an operation display device of a combination weigher. The combination weigher operates to weigh product batches with a plurality of weigh units, combine the resultant weight signals in various combinations, select from the resultant combinations a combination having a total weight satisfying a predetermined condition and collect product from the corresponding weigh units, for forming a pack of product having a desired weight. The operation display device is adapted to set desired operational conditions of the combination weigher and display various data of operation derived from the weigher in operation. The message language switching device of this invention is provided for switching a language of explanatory words or messages displayed on a display screen of the operation display device into another language which is arbitrarily selected by an operator from previously registered several languages and easily understood by the operator.

EP 0 431 730 A2

# MESSAGE LANGUAGE SWITCHING DEVICE FOR COMBINATION WEIGHER

This invention relates to an operational display device of a combination weigher and, especially, to a device for changing the language of messages displayed on its display screen.

A combination weigher operates to weigh product batches by means of a plurality of weigh units, combine the resultant weigh signals in various combinations, select from the resultant combinations a combination satisfying a predetermined aggregate weight condition, and collect the product batches from the corresponding weigh units to form a pack of a desired weight. Such a weigher generally comprises a weighing mechanism including the weigh units, a feeding device for feeding product thereto and a discharge device for discharging and collecting product from the weigh units, a main control device for effecting combination selecting operating of the weight signals and control of the feeding and discharging devices, and an operation display device for setting desired operational conditions, such as the target value for the total weight, allowable error, and speed of operation, and for displaying various data of operation, such as actual weight of selected combination and selected weigh units.

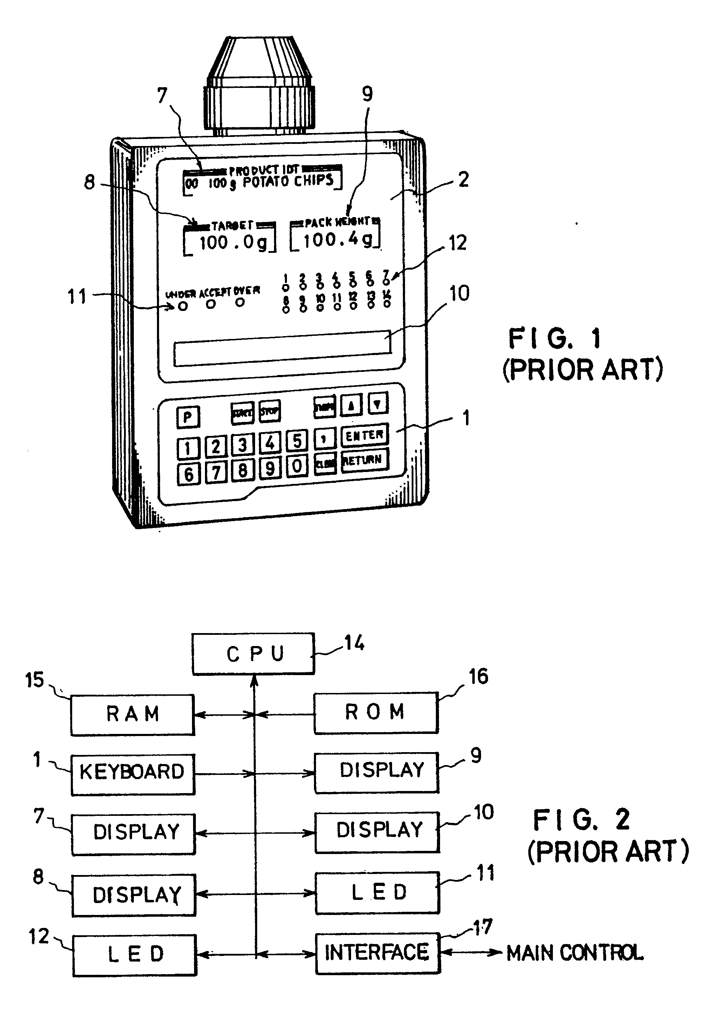

As shown in Figure 1, the operation display device generally comprises a setting unit including an input keyboard 1, a display unit including a display screen 2 and a control unit including a central processing unit (CPU) 14, a random access memory (RAM) 15 and a read-only memory (ROM) 16 as shown in Figure 2. The display screen 2 includes, as shown for example, an area 7 for displaying a tradename of product to be weighed, an area 8 for displaying a preset target weight, an area 9 for displaying a measured actual weight, an area 10 for displaying data of operation and an operational condition menu, light emitting diodes (LED) 11 for indicating acceptability of combined weight and LEDs 12 for indicating weigh units of selected combination. The CPU 14 operates in accordance with programs previously stored in the ROM 16 to write information input from the keyboard 1 in the RAM 15 and also display it in the display areas 7 and 8. The CPU 14 also supplies the information on the operational conditions written in the RAM 15 through an interface 17 to the main control device and further receives the data of operation from the main control device through the interface 17 to display and indicate them in the display areas 9 and 10 and by the LEDs 11 and 12. The structure and operation of the abovementioned combination weigher will not be described in more detail since it is disclosed in US Patent Nos. 4,840,240 and 4,780,830, for example.

In the abovementioned display screen 2, the words indicating a displayed item, which are referred to as a "message", such as PRODUCT I.D.T., TARGET and PACK WEIGHT, and the operational condition menu displayed in the display area 10 are written in a specific language (English in the drawing). Accordingly, it is a matter of course that an operator who is not skilled in the language used for message display will suffer difficulties in operating the machine. Recently, with many combination weighers being traded between different countries and this problem of the message display being in a fixed language, has naturally been recognised.

As a solution to the problem there is provided in accordance with the present invention an operation display device for a combination weigher, comprising memory means for storing messages as a guidance for selecting operational conditions of said weigher and messages indicating a state of operation of said weigher, display means including a display screen for displaying said messages, and control means for reading said messages from said memory means and supplying the same to said display means;
characterised in that
said memory means includes a plurality of memory regions for storing said messages in individual languages, respectively, and
said control means includes selection means for reading said messages selectively from one of said memory regions and supplying the same to said display means.

These and other features of this invention will be described in more detail below with reference to the accompanying drawings, in which:-

Figure 1 is a perspective view showing an example of an operation display unit of a combination weigher according to the prior art;

Figure 2 is a block diagram showing an information processing arrangement of the operation display unit of Figure 1;

Figure 3 is a block diagram showing a structure of a message language switching device in a first embodiment of the operation display device for combination weigher according to this invention;

Figure 4 is a front view showing appearance of an operation display unit in a second embodiment of the operation display device for combination weigher according to this invention;

Figure 5 is a block diagram showing an information processing arrangement in the second embodiment;

Figure 6 is a diagram showing a schematic structure of a language table in the second embodiment;

Figure 7 is a flow-chart showing a program of language switching operation in the second embodiment;

Figure 8 is a diagram showing an example of a display screen of the operation display unit in the second embodiment;

Figure 9 is a diagram showing an example of the display screen of the operation display unit in a third embodiment of the operation display device for combination weigher according to this invention;

Figure 10 is a diagram showing an example of the display screen of the operation display unit in a fourth embodiment of the operation display device for combination weigher according to this invention;

Figure 11 is a diagram showing another example of the display screen of the operation display unit in the fourth embodiment;

Figure 12 is a flow-chart showing a program of language switching operation in the fourth embodiment;

Figure 13 is a flow-chart showing a program executed when a power supply is put on in the fourth embodiment;

Figure 14 is a flow-chart showing a program of language selecting operation in a fifth embodiment of the operation display device for combination weigher according to this invention;

Figure 15 is a diagram showing a display screen under the state of key position No. 3 of the operation display unit in the fifth embodiment;

Figure 16 is a diagram showing a display screen under the state of language selection of the operation display unit in the fifth embodiment;

Figure 17 is a schematic block diagram showing language table, RAM and non-volatile memory in the fifth embodiment;

Figure 18 is a flow-chart showing a program of language switching operation in the fifth embodiment; and

Figure 19 is a flow-chart showing a program executed when the power supply is put on in the fifth embodiment.

Throughout the drawings, the same reference numerals are given to corresponding structural compounds.

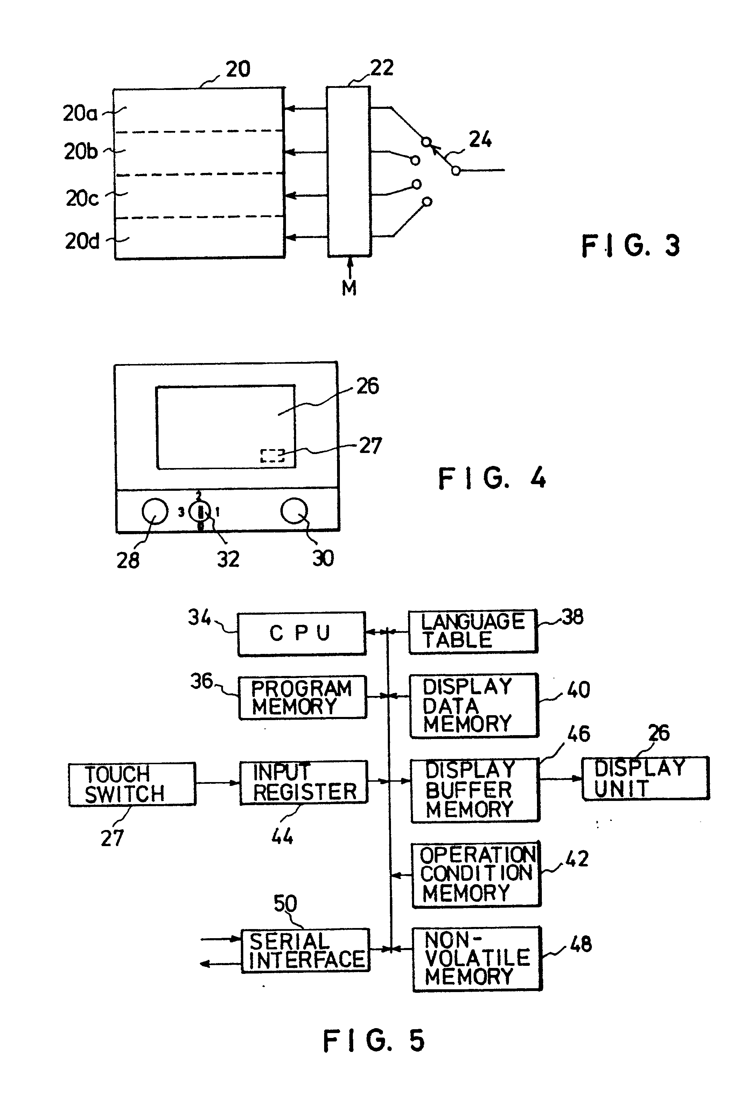

The first embodiment has the same structure as Figure 2, except that it is provided with a ROM 20 as shown in Figure 3 instead of the ROM 16. The ROM 20 is divided into four regions 20a, 20b, 20c and 20d which store operation programs for the CPU 14 and various messages in four languages, such as Japanese, English, German and French, respectively. In the respective regions, the same programs and corresponding messages are stored in the same addresses.

When a change-over switch 24 is turned to the position of a desired language, this position is written in a register 22 in response to its input memory signal M and a corresponding selection signal is supplied therefrom to the ROM 20. The input memory signal M is synchronized with the clock signal of the CPU 14 and, thus, the programs and messages are supplied to the CPU 14 from the memory region specified by the selection signal.

Since the same programs and corresponding messages are stored in the same addresses of the respective memory regions and the memory signal M is synchronized with the clock signal, as described above, there is no chance for excursion of the CPU 14 at the time of switching the regions. The number of memory regions of the ROM 20 is optional and the programs may be stored in a separate ROM.

The operation display unit of the second embodiment of this invention includes a flat display unit 26 as shown in Figure 4 and the display unit 26 includes a plurality of touch switches 27 (only one is shown) at predetermined positions on its display screen for enabling input by mere contact with these positions. In Figure 4, 28 denotes a push button switch for emergency stop and 30 denotes a push button switch for reset. 32 denotes a key switch for operation confinement and, in this embodiment, it is provided with four positions 0, 1, 2 and 3 and adapted to enable setting operation at positions 2 and 3 only.

As shown in Figure 5, the operation display unit includes a central processing unit (CPU) 34, a program memory 36 for storing programs for the CPU 34, a language table 38 for storing various messages in predetermined languages, a display data memory 40 for storing numerical data and the like to be displayed, an operational conditional memory 42 used in automatic setting of the combination weigher for storing various operational conditions thereof, an input register 44 for temporarily holding various signals produced by operating the touch switch 27, a display buffer memory 46 for temporarily holding various data to be displayed by the display unit 26, a non-volatile memory (NVM) 48 for holding memories when the power is shut off, and a serial interface 50 for mediating data transfer with respect to the central control device.

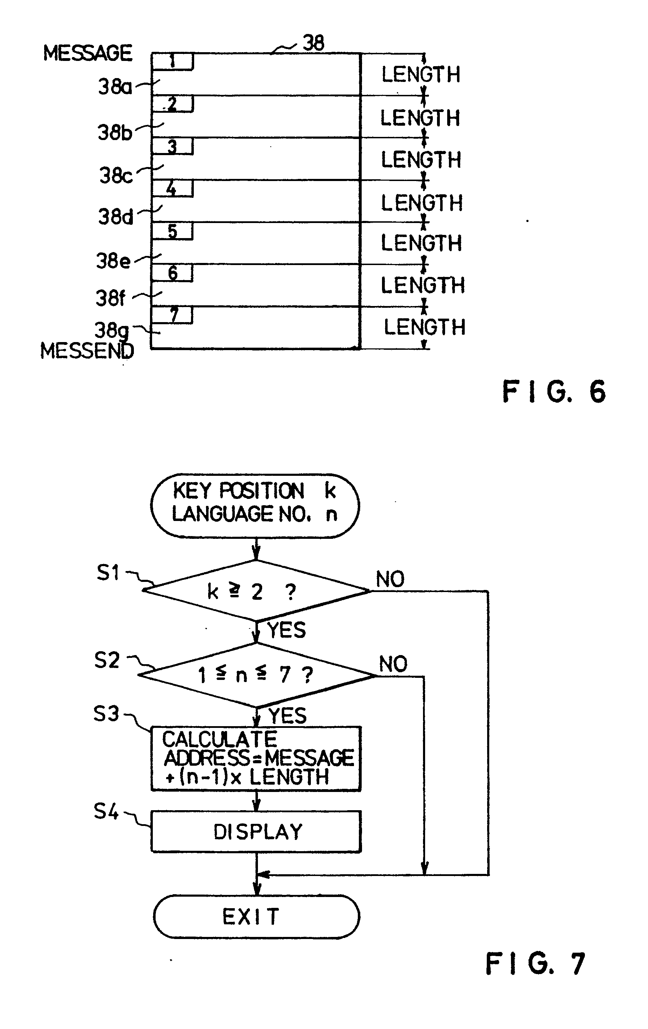

As shown in Figure 6, the language table 38 is partitioned into seven regions 38a, 38b, 38c, 38d, 38e, 38f and 38g, for example, and various messages are stored in these regions in Japanese, German, Spanish, English, French, Italian and Dutch languages, respectively, for example. In the respective regions, all mutually corresponding messages are stored at the same distance from their lead addresses and in the same length. Accordingly, the length of the respective regions denoted by LENGTH in the drawing are all equal to each other. The top portions of the respective regions store their identification codes such as 1, 2, 3, ... 7, as shown. In the drawing, MESSAGE denotes the lead address of the first region 38a and MESSEND denotes the final address of the last region 38g.

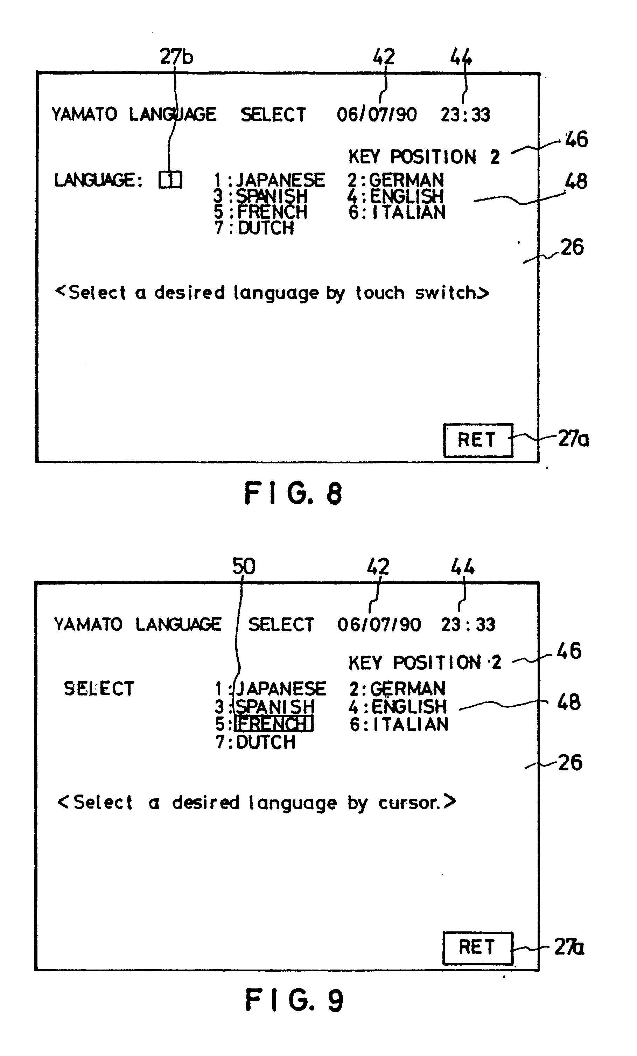

In the device of this embodiment, when the key switch 32 of Figure 4 is turned to position 2 or 3 and a touch switch 27a indicated as RET (return) in the right corner of the display screen 26 is repeatedly pushed, a language switching menu as shown in Figure 8 appears in the display screen 26. This menu includes indications of date 42, time 44 and position 46 of the key switch 32, a list 48 of selectable languages and another touch switch 27b. Every time the touch switch 27b is pushed, the numeral indicated therein is raised by one. If Spanish language is wanted, the touch switch 27a is pushed when the touch switch 27b indicates "3". This results in a language switching input applied to the CPU 34 which operates in accordance with a program of Figure 7 as described below.

It is first inquired whether the position of the key switch 32 is "2" or above or not (step S1) and, only when the answer is YES, it is inquired whether the input language number is acceptable or not (step S2). In this example, according to the language list 48 of Figure 8, the input number is acceptable (YES) if it is between 1 and 7 inclusive. Only when the answer is YES, the lead address of a memory region (38c in this example) of the language table 38 of Figure 6 which stores messages of the wanted language is calculated (step S3). This is attained by an arithmetic operation of MESSAGE + LENGTH x 2, since the lead address of the first region 38a is MESSAGE and the length of each region is LENGTH as described above. The CPU 34 reads an information having a length of LENGTH from the calculated address of the language table 38 and displays it in the display screen 26. In this example, therefore, the messages are displayed thereafter in Spanish language.

It is possible, in the above embodiment, to arrange to specify a language number by using a conventional input keyboard instead of the touch switch 27 and, also, to specify a wanted language with a cursor 50 as shown in Figure 9. While the displayed image of Figure 9 is obtained similarly to the image of Figure 8, the cursor 50 displayed instead of the touch switch 27b is moved onto a wanted language by cursor keys (not shown) attached separately to the display unit 26 and the touch switch 27a is pushed. This results in a similar operation to the above which gives a display of an operational condition menu and likes in the wanted language.

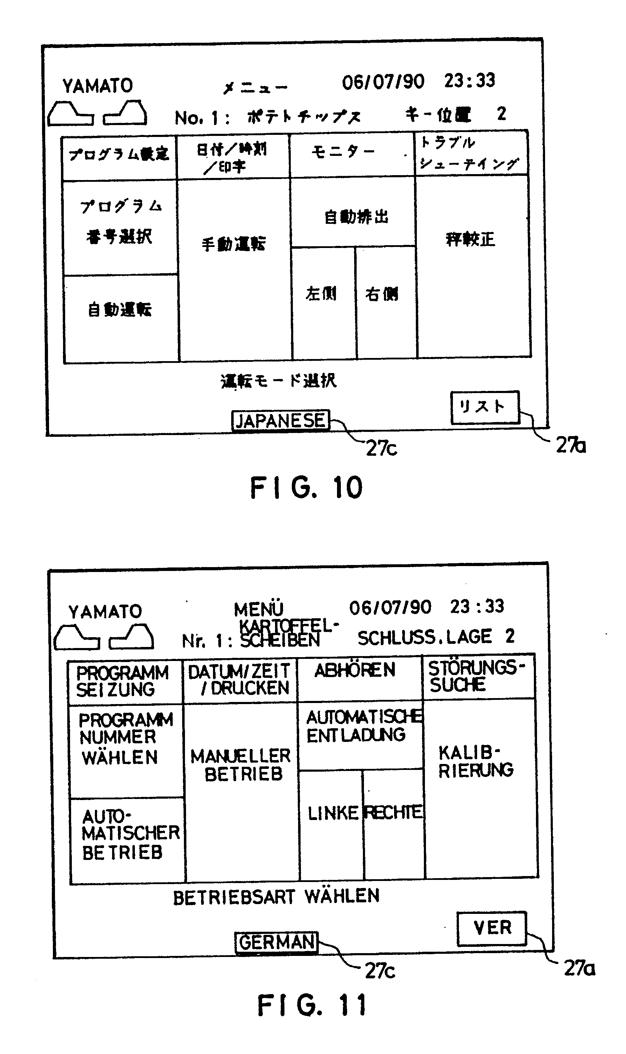

In a further embodiment of this invention, a menu for setting operational conditions as shown in Figure 10 as an example is displayed originally in a certain language (Japanese in the drawing) instead of the language selecting menu as shown in Figures 8 and 9. Configuration and use of this menu are well known in the art and have no direct connection to the invention and, therefore, it will not be described further. In this embodiment, however, a language indicating touch switch 27c is displayed in the bottom center of the menu and, every time it is pushed, the language of the displayed menu varies in a predetermined order. If the touch switch 27a in the right center is pushed when a menu is displayed in a wanted language, another menu can be displayed in the same language.

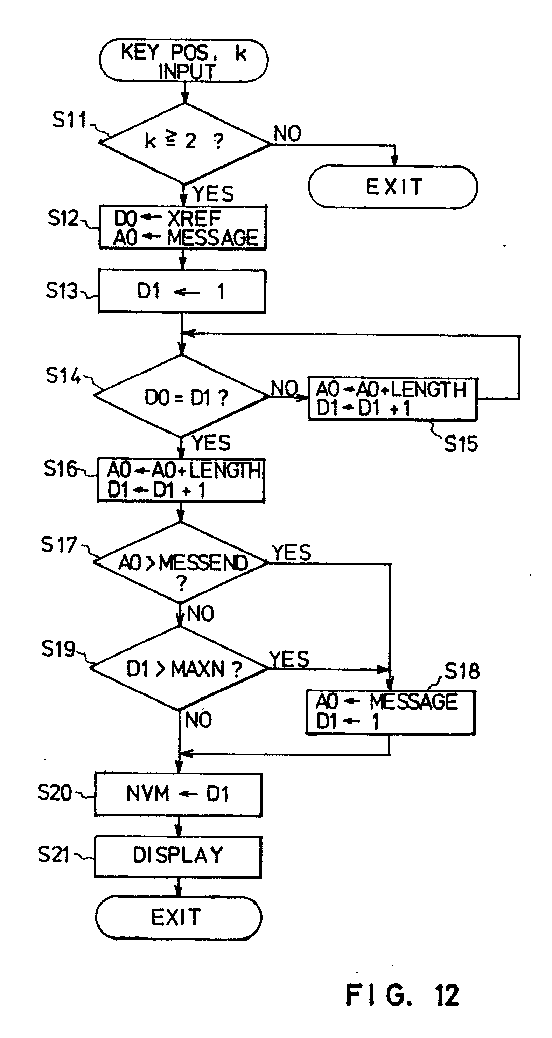

The language switching operation effected every time the touch switch 27c is pushed as described above is executed by the CPU 34 in accordance with the flow-chart of Figure 12. Before describing the operation, it is assumed in this embodiment that the CPU 34 is provided with data registers D0 and D1 for storing numerical values and an address register A0 for storing an address and that the language identification number is XREF and the number of selectable languages contained in the language table 38 is MAXN.

When a language switching input is applied by the touch switch 27c, it is first inquired whether the position of the key switch 32 is 2 or above or not (step S11) as same as in the first step of Figure 7. In this case, also, only when the answer is YES, the identification number XREF of the currently displayed language is written in the data register D0 and the lead address, MESSAGE, of the language table 38 is written in the address register A0 (step S12). Next, the identification number of the first region of the language table 38, namely "1" in this embodiment, is written in the second data register D1 (step S13) and it is then inquired whether the content of D1 is identical to the content of D0 or not (step S14). If NO, the content of the address register A0 is raised by LENGTH, the length of each memory region of the language table 38, and the content of the data register D1 is raised by one (step S15). The steps S14 and S15 are repeated until the contents of D0 and D1 coincide and, when their coincidence is obtained, the content of the address register A0 becomes identical to the lead address of the memory region of the currently displayed language. Then, the content of A0 is raised by LENGTH and the content of D1 is raised by one, thereby preparing for switching to the language of the next region (step S16). Next, it is inquired whether the content of the address register A0 exceeds the final address, MESSEND, or not (step S17) and, if YES, the content of A0 is restored to the lead address, MESSAGE, and the numerical value of the data register D1 is restored to "1" (step S18) since the currently displayed language is the language of the last region 38g. If NO, it is inquired whether the value of D1 exceeds the number of regions, MAXN, or not (step S19). If it exceeds, the step S18 is executed for the same reason as the above and, if not, the content of D1 is stored as it is in the non-volatile memory (NVM) 48 (step S20). If an information of the length of one LENGTH is then read from the address stored in the address register A0 and displayed, the displayed language can be changed (step S21). The changed language is not erased but maintained when the power is shut off and it is displayed as it is when the power is restored, since its identification number is stored in the NVM 48.

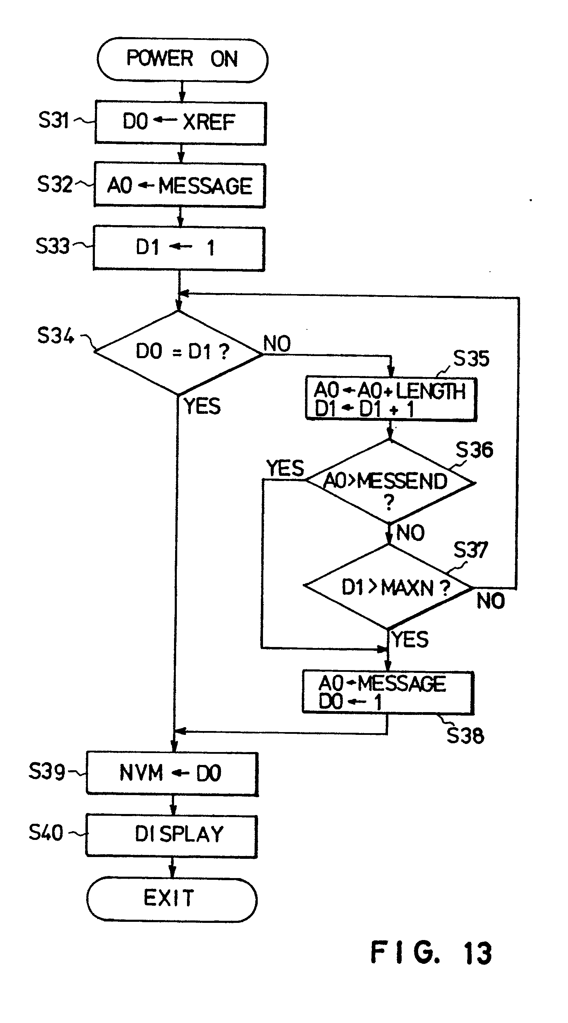

Referring to Figure 13, when the power is restored, the language identification number, XREF, stored in the NVM 48 is returned to the data register D0 (step S31), the lead address, MESSAGE, of the first region 38a is written in the address register A0 (step S32) and "1" is written in the data register D1 (step S33). Next, it is inquired whether the contents of the data registers D0 and D1 are identical or not (step S34). If NO, the content of the address register A0 is raised by one (step S35). It is then inquired whether the content of A0 exceeds the final address, MESSEND, or not (step S36). If NO, it is inquired whether the content of D1 exceeds the number of selectable languages, MAXN, or not (step S37) and, if NO, returning to the step S34, the same operation is repeated. If any excess if found in the step S36 or S37, the content of A0 is restored to the lead address, MESSAGE, and the content of D0 is restored to "1" (first region) (step S38) and the content of D0 is written in the NVM 48 (step S39). The content of D0 is also written in the NVM 48 when coincidence is obtained in the step S34. Then, an information of the length of one LENGTH is read out from the address stored in the address register A0 and displayed (step S40).

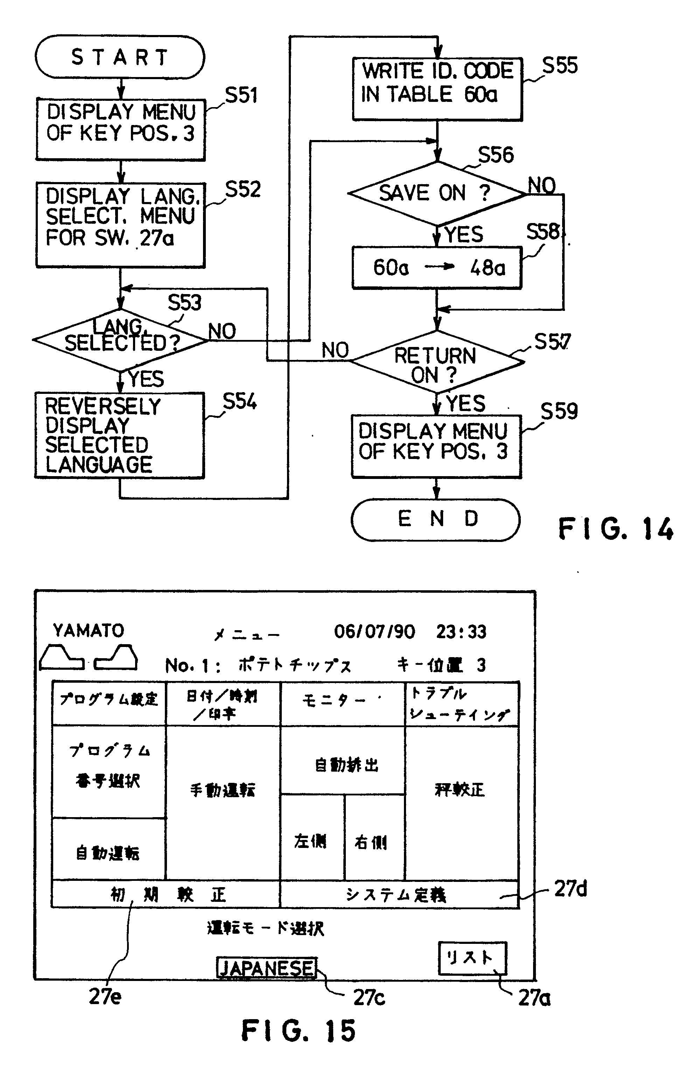

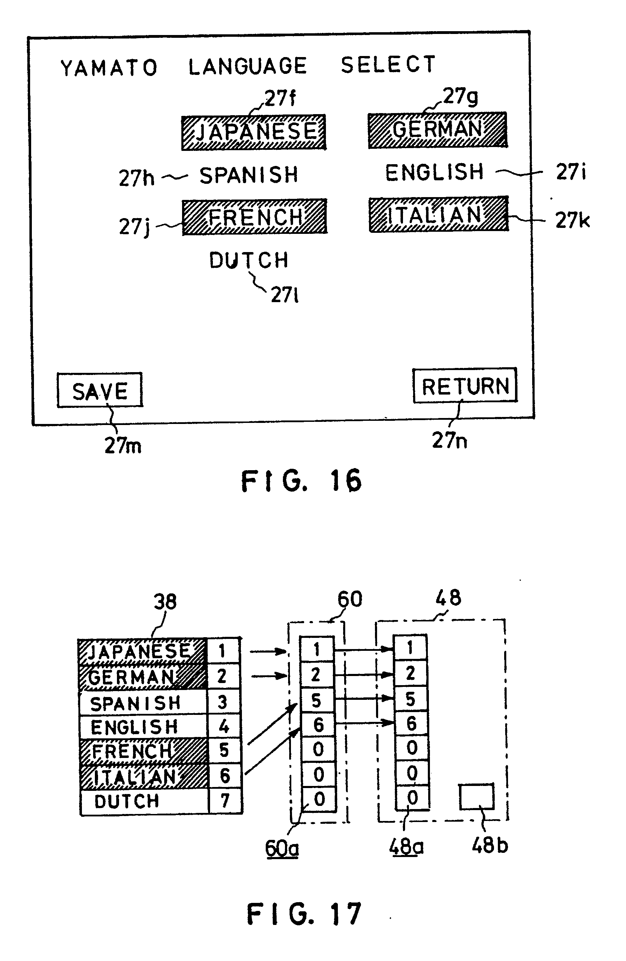

As described above, the fourth embodiment is arranged to store various messages in a substantial number of languages and to switch these languages sequentially in a predetermined order every time the touch switch 27c is pushed. In other words, it is sometimes necessary to push the touch switch 27c substantial times in order to reach the wanted language. The more the languages are stored in this operation display device, the more advantageous it becomes in respect of international universality. As a matter of fact, however, this device has such a disadvantage in that it is troublesome and time-consuming in handling since the languages needed thereby are often the language of an importing country in which the weigher is used and the language of an exporting country in which the weigher is regulated. In order to remove the abovementioned disadvantage, the fifth embodiment as described below is arranged to previously designated a relatively small number of languages which are needed by each weigher among a number of languages stored in the device and to effect the switching of language among the designated languages. To this end, in the fifth embodiment, a ROM 60 is provided between the language table 38 and the NVM 48 of Figure 5 as described later with reference to Figure 17. In the fifth embodiment, it is also assumed that the language table 38 previously stores messages in the seven languages as same as in the fourth embodiment and the description will be made on an operation for designating four languages, for example, therefrom with reference to the flow-chart of Figure 14.

If the key switch 32 (Fig. 4) is first turned to its position No. 3, a corresponding menu image as shown in Figure 15 is displayed (in Japanese in the drawing) (step S51). While this menu is similar to that of Figure 10, it differs from the latter in that items of "system definition" and "initial calibration" and corresponding touch switches 27d and 27e are added. If the touch switch 27d of "system definition" is then pushed, a corresponding language selection menu as shown in Figure 16 is displayed (step S52). In this menu, the seven languages stored previously in the language table 38 are indicated in English, for example, and corresponding touch switches 27f, 27g, 27h, 27i, 27j, 27k and 27l are also provided respectively at their indicated positions. Moreover, indications of "SAVE" and "RETURN" and corresponding touch switches 27m and 27n are provided in this menu. The item of "initial calibration" will not be described further since it has no direct connection to this invention.

If one of the touch switches 27f, 27g, 27h, 27i, 27j, 27k and 27l (e.g., 27f) which corresponds to the language to be designated first is pushed, it is inquired whether the touch switch is pushed or not (step S53) and the language (JAPANESE) corresponding to the pushed touch switch (27f) is reversely displayed as shown with hatching in Figure 16 (step S54) and the identifications code (1) of the language is transferred from the language table 38 to the RAM 60 and stored in the lowest empty address (the lead address in this case) of a data table 60a formed therein (step S55). It is then inquired whether the touch switch 27m of "SAVE" is pushed or not (step S56) and, if not, it is inquired whether the touch switch 27n of "RETURN" is pushed or not (step S57). If not, the step S53 is resumed and the language selection menu of Figure 16 is displayed. Therefore, the same operation may be repeated to designate necessity languages (e.g., Japanese, German, French and Italian), reversely display them as shown in Figure 16 and register them in the ROM 60 as shown in Figure 17.

While all the designated languages have thus been stored in the ROM 60, the touch switch 27m of "SAVE" may be pushed if it is desired to protect the memory from power suspension. Then, a step S58 follows the step S56 and the content of the data table 60a of the ROM 60 is transferred to a data table 48a correspondingly provided in the NVM 48. The identification code "0" appearing in the data tables 48a and 60a means that the corresponding address is empty.

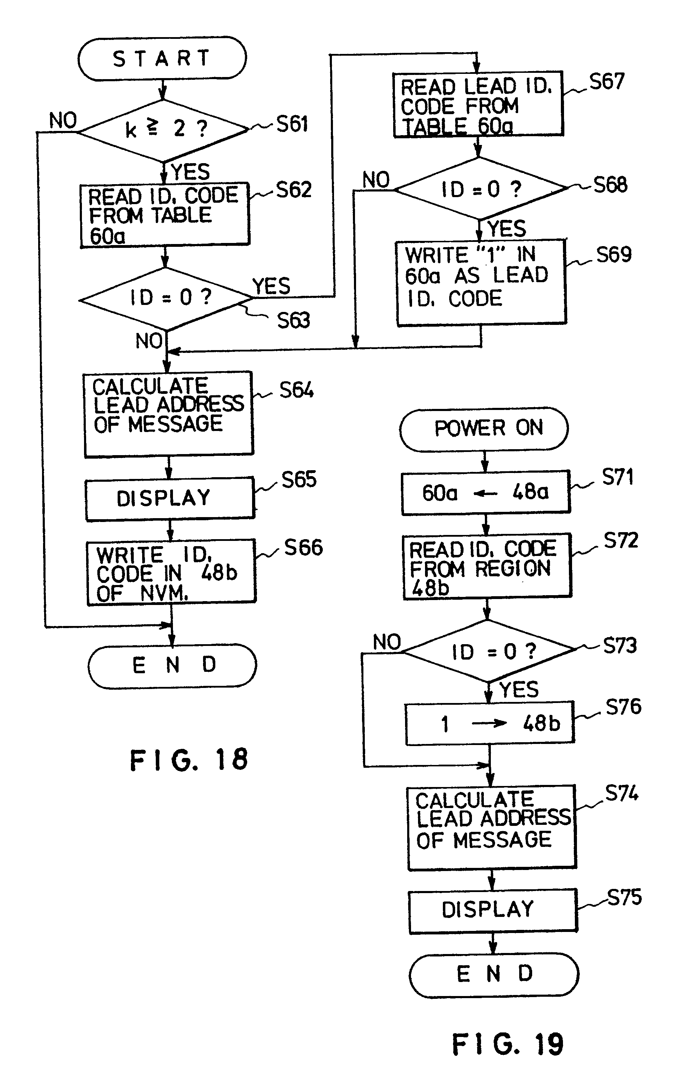

Upon completion of designation of necessity languages, the touch switch 27n of "RETURN" may be pushed. Then, a step S59 follows the step S59 and the menu corresponding to position No. 3 of the key switch 32 is displayed as in the first step S51 (Figure 15). If the key switch 32 is then turned to position No. 2, the menu of Figure 10 is displayed and the indications of "system definition" and "initial calibration" disappear. If the touch switch 27c is then pushed, the message can be displayed in a specific language which is arbitrarily selected from the designated languages in accordance with a program as shown in Figure 18. (This operation is effected similarly even if the key switch 32 is put in position No. 3.)

As shown in Figure 18, it is first inquired whether the position of the key switch 32 is "2" or above, or not (step S61). Only when it is the case, the identification code is sequentially read out from the lowest address of the data table 60a of the ROM 60 (step S62) and it is inquired whether this code is "0" or not (step S63). If not, or if it belongs to any designated language, the lead address of the memory region of the language table 38 which stores this language is calculated (step S64). The calculation is effected in the same manner as in the step S3 of the second embodiment and, as in the aforementioned step S4, a message having a length of one LENGTH from the calculated lead address is read out from the language table 38 and displayed (step S65). Next, this indentification code is written in a separate memory region 48b of the NVM (step S66) for preventing its erasure under power suspension. If the identification code is "0" in the step S63, or if the empty address is reached, the identification code is read out from the lead address of the data table 60a (step S67) and it is inquired whether this code is "0" or not (step S68). If not (it should not be "0" so long as any language has been designated), the steps S64 and on follow and the message is displayed in this language. However, if it is "0", or if no designated language has been registered, "1" is written in the lead address of the data table 60a as an identification code (step S69) and the steps S64 and on are executed. This results in a message display in the language of identification code "1" (Japanese in this example) of the language table 38.

Although the memory in the data table 60a of the ROM 60 is erased if the power is suspended during the above operation, the operation is resumed in accordance with a program as shown in Figure 19 when the power is restored, since the content of the data table 60a is fully transferred to the data table 48a of the NVM 48 and the identification code handled just before is held in the memory region 48b. More specifically, the content of the data table 48a is first returned to the data table 60a (step S71), the identification code is then read out from the memory region 48b (step S72) and it is inquired whether it is "0" or not (step S73). If not, the lead address of the corresponding memory region of the language table 38 is calculated in the same mode as abovementioned (step S74) and the message is displayed in the corresponding language (step S75). If the content of the memory region is "0", it is considered that no language has been designated. Therefore, an identification code of "1" is written in the memory region 48b (step S76) and the steps S74 and S75 are executed to display the message in the corresponding language (Japanese in this case).

The above embodiment are provided for illustrative purpose only and are not intended to confine the invention. It should be obvious to those skilled in the art that various modifications and changes can be added to these embodiments without leaving the spirit and scope of this invention as defined in the appended claims.

## Claims

1. An operation display device for a combination weigher, comprising memory means (20; 38) for storing messages as a guidance for selecting operational conditions of said weigher and messages indicating a state of operation of said weigher, display means (26) including a display screen for displaying said messages, and control means (14; 34) for reading said messages from said memory means and supplying the same to said display means;
characterised in that
said memory means includes a plurality of memory regions (20a-2d; 38a-38g) for storing said messages in individual languages, respectively, and
said control means includes selection means for reading said messages selectively from one of said memory regions and supplying the same to said display means.

2. A device as set forth in claim 1, characterised in that said memory regions are adapted to stored an operation program, respectively.

3. A device as set forth in claim 1 of 2, characterised in that said selection means includes a change-over switch (24) for selectively specifying said memory regions.

4. A device as set forth in claim 1 or 2, characterised in that said selection means includes a keyboard for selectively specifying said memory regions.

5. A device as set forth in claim 1, characterised in that said selection means includes a touch switch (27) for sequentially specifying said memory regions, and said touch switch is disposed in said display screen (26).

6. A device as set forth in claim 1, characterised in that said selection means includes means for displaying on said display screen a movable cursor (50) for selectively specifying said memory regions.

7. A device as set forth in claim 1, characterised in that said memory means (38) is adapted to store in each of said memory regions an identification code of said language in addition to said message and provided with auxiliary memory means (60) for storing part of said identification codes, and said selection means includes means for selectively writing two or more of said identification codes in said auxiliary memory means and means for selectively reading one of said identification codes from said auxiliary memory means and supplying said message to said display means.

FIG. 1
(PRIOR ART)

FIG. 2
(PRIOR ART)

F I G. 3

F I G. 4

F I G. 5

9

MESSAGE

38a — | 1 | LENGTH

38b — | 2 | LENGTH

38c — | 3 | LENGTH

38d — | 4 | LENGTH

38e — | 5 | LENGTH

38f — | 6 | LENGTH

38g — | 7 | LENGTH

MESSEND

~38

## F I G. 6

KEY POSITION k
LANGUAGE NO. n

S1 — $k \geqq 2$ ? — NO

YES

S2 — $1 \leqq n \leqq 7$ ? — NO

YES

S3 — CALCULATE
ADDRESS = MESSAGE
$+ (n-1) \times$ LENGTH

S4 — DISPLAY

EXIT

## F I G. 7

YAMATO LANGUAGE    SELECT    06/07/90    23:33

KEY POSITION 2

LANGUAGE:  ☐    1:JAPANESE    2:GERMAN
               3:SPANISH     4:ENGLISH
               5:FRENCH      6:ITALIAN
               7:DUTCH

<Select a desired language by touch switch>

RET

## FIG. 8

YAMATO LANGUAGE    SELECT    06/07/90    23:33

KEY POSITION 2

SELECT         1:JAPANESE    2:GERMAN
               3:SPANISH     4:ENGLISH
               5:FRENCH      6:ITALIAN
               7:DUTCH

<Select a desired language by cursor.>

RET

## FIG. 9

**YAMATO**   メニュー   06/07/90  23:33
No. 1: ポテトチップス   キー位置  2

| プログラム設定 | 日付／時刻／印字 | モニター | | トラブルシューテイング |
|---|---|---|---|---|
| プログラム番号選択 | 手動運転 | 自動排出 | | 秤較正 |
| 自動運転 | | 左側 | 右側 | |

運転モード選択

JAPANESE ～27c   リスト ～27a

## FIG. 10

**YAMATO**   MENÜ   06/07/90  23:33
KARTOFFEL-
Nr. 1: SCHEIBEN   SCHLUSS.LAGE 2

| PROGRAMM SEIZUNG | DATUM/ZEIT / DRUCKEN | ABHÖREN | | STÖRUNGS-SUCHE |
|---|---|---|---|---|
| PROGRAMM NUMMER WÄHLEN | MANUELLER BETRIEB | AUTOMATISCHE ENTLADUNG | | KALIB-RIERUNG |
| AUTO-MATISCHER BETRIEB | | LINKE | RECHTE | |

BETRIEBSART WÄHLEN

GERMAN ～27c   VER ～27a

## FIG. 11

FIG. 12

FIG. 13

START

DISPLAY MENU OF KEY POS. 3 — S51

DISPLAY LANG. SELECT. MENU FOR SW. 27a — S52

S53 LANG. SELECTED? — NO

YES

REVERSELY DISPLAY SELECTED LANGUAGE — S54

WRITE ID. CODE IN TABLE 60a — S55

S56 SAVE ON ? — NO

YES — S58

60a → 48a

S57 RETURN ON ? — NO

YES

DISPLAY MENU OF KEY POS. 3 — S59

END

NO

**FIG. 14**

---

| YAMATO | メニュー | 06/07/90　23:33 |
| | No. 1: ポテトチップス | キー位置 3 |

| プログラム設定 | 日付／時刻／印字 | モニター・ | トラブルシューティング |
|---|---|---|---|
| プログラム番号選択 | 手動運転 | 自動排出 | 秤較正 |
| | | 左側 ｜ 右側 | |
| 自動運転 | | | |
| 初　期　較　正 | | システム定義 | 27d |

運転モード選択

JAPANESE — 27c

リスト — 27a

27e

**FIG. 15**

YAMATO   LANGUAGE   SELECT

27f

JAPANESE

27g

GERMAN

27h ～ SPANISH

ENGLISH ～ 27i

27j ～ FRENCH

ITALIAN ～ 27k

DUTCH

27l

SAVE

RETURN

27m

27n

## FIG. 16

38

60

48

| JAPANESE | 1 |
| GERMAN | 2 |
| SPANISH | 3 |
| ENGLISH | 4 |
| FRENCH | 5 |
| ITALIAN | 6 |
| DUTCH | 7 |

| 1 |
| 2 |
| 5 |
| 6 |
| 0 |
| 0 |
| 0 |

| 1 |
| 2 |
| 5 |
| 6 |
| 0 |
| 0 |
| 0 |

60a

48a   48b

## FIG. 17

START

NO ← k ≧ 2 ? — S61

YES

READ ID. CODE FROM TABLE 60a — S62

ID = 0 ? — S63

YES →

NO

CALCULATE LEAD ADDRESS OF MESSAGE — S64

DISPLAY — S65

WRITE ID. CODE IN 48b OF NVM. — S66

END

READ LEAD ID. CODE FROM TABLE 60a — S67

ID = 0 ? — S68

NO

YES

WRITE "1" IN 60a AS LEAD ID. CODE — S69

**F I G. 18**

POWER ON

60a ← 48a — S71

READ ID. CODE FROM REGION 48b — S72

ID = 0 ? — S73

NO

YES

1 → 48b — S76

CALCULATE LEAD ADDRESS OF MESSAGE — S74

DISPLAY — S75

END

**F I G. 19**